(19) Europäisches Patentamt / European Patent Office / Office européen des brevets

(11) **EP 3 333 594 A1**

(12) **EUROPEAN PATENT APPLICATION**

(43) Date of publication:
**13.06.2018 Bulletin 2018/24**

(51) Int Cl.:
***G01V 5/00*** (2006.01)

(21) Application number: **17194043.0**

(22) Date of filing: **29.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.12.2016 CN 201611116487**

(71) Applicants:
- **Tsinghua University
  Beijing 100084 (CN)**
- **Nuctech Company Limited
  TongFang Building,
  Shuangqinglu,
  Haidian District
  Beijing 100084 (CN)**

(72) Inventors:
- **KANG, Kejun
  Beijing, 100084 (CN)**
- **CHENG, Jianping
  Beijing, 100084 (CN)**
- **CHEN, Zhiqiang
  Beijing, 100084 (CN)**
- **ZHAO, Ziran
  Beijing, 100084 (CN)**
- **LI, Junli
  Beijing, 100084 (CN)**
- **WANG, Xuewu
  Beijing, 100084 (CN)**
- **ZENG, Zhi
  Beijing, 100084 (CN)**
- **ZENG, Ming
  Beijing, 100084 (CN)**
- **WANG, Yi
  Beijing, 100084 (CN)**
- **ZHANG, Qingjun
  Beijing, 100084 (CN)**
- **GU, Jianping
  Beijing, 100084 (CN)**
- **YI, Xi
  Beijing, 100084 (CN)**
- **LIU, Bicheng
  Beijing, 100084 (CN)**
- **XU, Guangming
  Beijing, 100084 (CN)**
- **WANG, Yongqiang
  Beijing, 100084 (CN)**

(74) Representative: **Gunzelmann, Rainer
Wuesthoff & Wuesthoff
Patentanwälte PartG mbB
Schweigerstraße 2
81541 München (DE)**

(54) **INSPECTION DEVICES AND INSPECTION METHODS**

(57) Inspection devices and inspection method are disclosed. The inspection method includes: performing X-ray scanning on an object being inspected so as to generate an image of the object being inspected; dividing the image of the object being inspected to determine at least one region of interest; detecting interaction between a cosmic ray and the region of interest to obtain a detection value; calculating a scattering characteristic value and/or an absorption characteristic value of the cosmic ray in the region of interest based on size information of the region of interest and the detection value; and discriminating a material attribute of the region of interest by means of the scattering characteristic value and/or the absorption characteristic value. With the above technical solutions, inspection accuracy and inspection efficiency may be improved.

EP 3 333 594 A1

100

120

110 X-Ray
Source

150 Monitoring
Apparatus

130 X-Ray
Decector

140 Controller

170 Cosmic
Ray
Detector

160 Computing
Apparatus

FIG. 1

## Description

## TECHNICAL FIELD

The present disclosure relates to radiation detection technology, and in particular to devices and methods for inspecting an object being inspected, such as a container truck.

## BACKGROUND

With development of world economy and international trade, container/vehicle cargo transportation is becoming widely used in national economy. Meanwhile, it also brings convenience for terrorists to transport contraband and dangerous goods, such as nuclear materials, explosives or drugs etc. which leads to serious threat to the lives of people around the world. For example, if nuclear material such as raw material uranium 235 or plutonium 239 reaches a certain amount (e.g., uranium 12-16kg, plutonium 6-9kg), it is possible to cause weapons-level nuclear explosion. In addition, criminal and economic losses caused by illegal proliferation of explosives and drugs have also brought great harm to individuals, families and a whole society. Therefore, it is necessary to strengthen nondestructive inspection on the container/vehicle cargo transportation, and strictly control and manage the illegal proliferation of the above materials.

There is a problem with the prior art that the current technique of inspecting the nuclear material and/or the drugs has a lower detection accuracy or a lower efficiency.

## SUMMARY

In view of one or more of problems in the prior art, an inspection device and an inspection method for inspecting an object being inspected such as a container are provided.

According to an aspect of the present disclosure, an inspection method is provided, including: performing X-ray scanning on an object being inspected to generate an image of the object being inspected; dividing the image of the object being inspected to determine at least one region of interest; detecting interaction between a cosmic ray and the region of interest to obtain a detection value; calculating a scattering characteristic value and/or an absorption characteristic value of the cosmic ray in the region of interest based on size information of the region of interest and the detection value; and discriminating a material attribute of the region of interest by means of the scattering characteristic value and/or the absorption characteristic value.

According to some embodiments, the image of the object being inspected includes at least one of following images: a single-energy transmission image, an attenuation coefficient image, a CT value image, an electron density image, and an atomic number image.

According to some embodiments, the material attribute of one region of interest is discriminated by means of the scattering characteristic value, and the material attribute of another region of interest is discriminated by means of the absorption characteristic value.

According to some embodiments, the inspection method further includes: judging whether nuclear material is contained in the region of interest by performing a nonparametric test.

According to some embodiments, the inspection method further includes: reconstructing a 3D image of the object being inspected by means of parameters.

According to some embodiments, an alarm signal is issued when the material attribute of the object being inspected satisfies a predetermined condition.

According to some embodiments, the step of discriminating the material attribute of the region of interest by means of the scattering characteristic value and/or the absorption characteristic value includes: determining an atomic number value of the material in the region of interest based on the scattering characteristic value and/or the absorption characteristic value by means of a previously created classification curve or lookup table.

According to some embodiments, the inspection method further includes: monitoring a trajectory of the object being inspected; and calculating, based on the trajectory, the detection value indicating a result of the interaction between the cosmic ray and the object being inspected.

According to some embodiments, performing the scanning on the object being inspected includes at least one of: performing backscattering scanning on the object being inspected; performing single-energy transmission scanning on the object being inspected; performing single-energy CT scanning on the object being inspected; performing double-energy X-ray transmission scanning on the object being inspected; performing double CT scanning on the object being inspected.

According to some embodiments, the step of calculating the scattering characteristic value and/or the absorption characteristic value of the cosmic ray in the region of interest based on the size information of the region of interest and the detection value includes:

calculating the scattering characteristic value by a formula of:

$$ R_{scatter} = \frac{\sigma_\theta{}^2 \cdot p^2}{L} $$

wherein $\sigma_\theta$ denotes a Root Mean Square of a scattering angle, $p$ denotes an average momentum of incident particles, and $L$ denotes the size information, particularly, a thickness of the material obtained by the X-ray scanning; calculating a stopping power value as the absorption characteristic value by a formula of:

$$R_{stop} = \frac{N_{stop}\big/\big(a_{stop} \cdot t_{stop}\big)}{N_{scatter}\big/\big(a_{scatter} \cdot t_{scatter}\big)} \cdot \frac{p}{L}$$

wherein $N_{scatte}/(a_{scatter} \cdot t_{scatter})$ represents a number $N_{scatter}$ of particles detected on an imaging area or volume $a_{scatter}$ within a time $t_{scatter}$ which are subjected to a scattering effect by substances, $N_{stop}/(a_{stop} \cdot t_{stop})$ represents a number $N_{stop}$ of particles detected on an imaging area or volume $a_{stop}$ within a time $t_{stop}$ which are subjected to a stopping effect by substances, $p$ denotes the average momentum of the incident particles, and $L$ denotes the size information, particularly, the thickness of the material obtained by the X-ray scanning.

According to another aspect of the present disclosure, an inspection device is provided, including: an X-ray source configured to emit an X-ray to perform scanning on an object being inspected; a detection and collection apparatus configured to detect and collect the X-ray penetrating the object being inspected to obtain detection data; a data processing apparatus configured to generate an image of the object being inspected based on the detection data and divide the image of the object being inspected to determine at least one region of interest; a cosmic ray detection apparatus configured to detect interaction between a cosmic ray and the region of interest to obtain a detection value and calculate a scattering characteristic value and/or an absorption characteristic value of the cosmic ray in the region of interest based on size information of the region of interest and the detection value, wherein the data processing apparatus is further configured to discriminate a material attribute of the region of interest by means of the scattering characteristic value and/or the absorption characteristic value.

According to some embodiments, the inspection device further includes: a positioning apparatus configured to determine a trajectory of the object being inspected, wherein the detection value obtained by the cosmic ray detection apparatus is matched with the trajectory to obtain the detection value of the region of interest.

With the above technical solutions, inspection accuracy and inspection efficiency may be improved.

## BRIEF DESCRIPTION OF THE DRAWINGS

In order to better understand the present disclosure, embodiments of the present disclosure will be described according to the accompanying drawings, in which:

Fig. 1 shows a schematic structure diagram of an inspection device according to an embodiment of the present disclosure;

Fig. 2 shows a schematic structure diagram of the computing apparatus as shown in Fig. 1;

Fig. 3A shows a side view of an inspection device according to an embodiment of the present disclosure;

Fig. 3B shows a top view of an inspection device according to an embodiment of the present disclosure;

Fig. 3C shows a schematic diagram of an X-ray scanning subsystem in an inspection device according to an embodiment of the present disclosure;

Fig. 4A shows a schematic structure diagram of a cosmic ray detector in an inspection device according to an embodiment of the present disclosure;

Fig. 4B shows a side view depicting a cosmic ray detector according to another embodiment of the present disclosure;

Fig. 4C is a left side view depicting a cosmic ray detector according to another embodiment of the present disclosure;

Fig. 4D is another left side view depicting a cosmic ray detector according to another embodiment of the present disclosure;

Fig. 5 is a schematic flow chart depicting an inspection method according to an embodiment of the present disclosure; and

Fig. 6 is a schematic flow chart depicting another inspection method according to an embodiment of the present disclosure.

## DETAILED DESCRIPTION

Hereinafter, particular embodiments of the present disclosure will be described in detail, and it should be noted that the embodiments described herein are for illustrative purposes only but not intended to limit the present disclosure. In the following description, numerous specific details are set forth in order to provide a thorough understanding of the present disclosure. It will be apparent, however, to the skilled in the art that the present disclosure needs not be practiced with these specific details. In other instances, well-known circuits, materials, or methods are not specifically described in order to avoid obscuring the present disclosure.

Throughout the specification, reference to "an embodiment", "embodiment", "an example" or "example" means that a particular feature, structure, or characteristic described in connection with the embodiment or example is included in at least one embodiment of the present disclosure. Therefore, the phrase "in one embodiment", "in an embodiment", "an example" or "example" throughout the specification does not necessarily refer to the same embodiment or example. In addition, specific features, structures, or characteristics may be combined in one or more embodiments or examples in any suitable combination and/or sub-combination. In addition, it will be understood by the skilled in the art that the drawings provided herein are for the purpose of illustration and that the drawings are not necessarily drawn in scale. The term "and/or" used herein includes any and all combinations of one or more of the items as listed.

For the problems in the prior art, an embodiment of the present disclosure provide a method of inspecting a container vehicle using X-rays and cosmic rays. According to the present embodiment, the object being inspected is scanned by an X-ray imaging system to obtain information such as a structure, a thickness and a gray scale of an object inside. Then, the object is detected by a cosmic ray system. A ray source used by the cosmic ray system is natural cosmic rays, which have stronger penetration ability, and can penetrate heavy nuclear material without an additional radiation source and be detected. In an embodiment of the present disclosure, the thickness and the gray scale provided by the X-ray imaging system are used as priori information for a cosmic ray imaging/material identification process, in order to address a problem that an imaging effect of the cosmic rays is greatly affected by the thickness of the material in a depth direction. Such an embodiment may improve an effect of the cosmic ray imaging technique on classifying substances, and may determine dangerous goods or contraband, such as heavy nuclear material, explosives and drugs contained therein, more accurately.

Usually, the object being inspected may be inspected with the X-rays. The X-rays have stronger penetration ability, a shorter measurement time and a higher resolution, which are commonly used in container cargo inspection at airports, customs and the like, e.g. X-ray transmission imaging, backscattering imaging and X-CT scanning etc. However, for high-Z (atomic number) substances, such as lead-shielded radiation sources, shielded or unshielded nuclear materials, a lead shield layer with a thickness of only several centimeters may block the X-rays, the conventional X-rays cannot penetrate the heavy nuclear material for identification.

In an embodiment of the present disclosure, it is proposed to inspect the object being inspected using secondary particles generated by the cosmic rays. The main particles of the cosmic rays when pass through the atmosphere to reach a sea level are muons ($\mu$) and electrons (e), with a ratio of about 10: 1. The muons have strong average energy of about 3/4GeV, a mass of about 206 times of negative electrons, and a flux of about $10000/(minute*m^2)$. It is measured that a maximum penetration depth of the muons with energy of 4GeV in the high-Z material, such as lead, is more than one meter, and the muons with higher energy can penetrate tens of meters of rock and metal. Thus, the muons of the cosmic ray may penetrate the potential heavy nuclear substance in the container vehicles/goods for detection.

In addition, according to an embodiment of the present disclosure, Coulomb's scattering occurs several times when the muons pass through the substance, deviating from their original direction. There is a correspondence between a scattering angle and an atomic number of the substance, and thus the material may be identified by measuring distribution of the scattering angles of the muons after penetrating the substance. The electrons in the cosmic rays have an obvious scattering effect, and are prone to have a large angle deflection or be absorbed when the electrons penetrate medium/low-Z substance with a certain thickness in the detection area, thus can be used for analyzing the distribution of the low-Z substance, such as drugs/explosives. For example, a correspondence relationship table or a classification curve between a scattering angle and/or an absorption characteristic and substances of various atomic numbers may be established in advance, and then in practical inspection process, a corresponding atomic number value may be obtained by collecting the scattering angle and/or the absorption characteristic of the object being inspected, so as to determine an attribute of the material of the object being inspected.

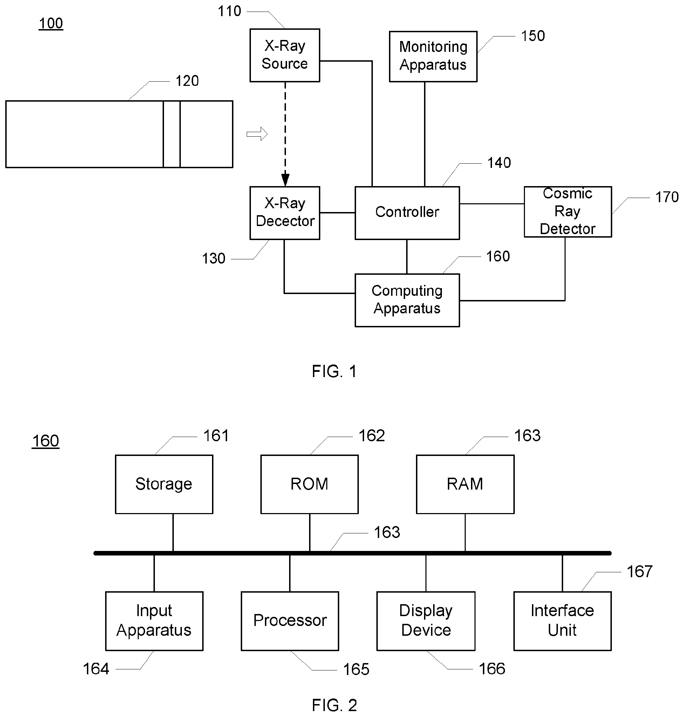

Fig. 1 shows a schematic structure diagram of an inspection device according to an embodiment of the present disclosure. The inspection device 100 as shown in Fig. 1 includes an X-ray source 110, an X-ray detection and data collection apparatus 130, a controller 140, a computing apparatus 160, a monitoring apparatus 150 and a cosmic ray detection and data collection apparatus 170. The inspection device 100 may perform security inspection on an object being inspected 120, such as a container trunk, e.g., judging whether there are contrabands such as nuclear material and/or drugs included. Although an X-ray detector and a data collection apparatus are integrated together as the X-ray detection and data collection apparatus in the present embodiment, the skilled in the art will appreciate that the X-ray detector and the data collection apparatus may be formed separately. Similarly, although in the present embodiment, a cosmic ray detector and a data collection apparatus are integrated together as the cosmic ray detection and data collection apparatus, the skilled in the art will appreciate that the cosmic ray detector and the data collection apparatus may be formed separately.

According to some embodiments, the X-ray source 110 as described above may be isotopes, an X-ray machine, or an accelerator, etc. The performed scanning modes may be transmission, backscattering or CT etc. The X-ray source 110 may be of single energy or dual energy. In this way, the object 120 being inspected may be inspected by the X-ray imaging system. For example, during the object 120 being inspected is proceeding, an operator may issue a command to the controller 140 by means of a human-machine interaction interface of the computing apparatus 160, instructing the X-ray source 110 to emit the X-rays, the X-rays penetrating the object 120 being inspected and then being received by

7      **EP 3 333 594 A1**      8

the X-ray detection and data collection apparatus 130, thereby an image of the object 120 being inspected may be quickly learned, and thus information such as a structure and/or a size may learned, providing priori knowledge for the subsequent inspection process of a cosmic ray system. At the same time, suspicious regions (also referred to as regions of interest) may be obtained by dividing a transparency and grayscale view which may be acquired according to the X-ray attenuation/gray scale/ atomic number, such as the high-Z region which cannot be penetrated by the X-rays and/or the low-Z region of the explosives/drugs which has limited discernibility.

Fig. 2 shows a schematic structure diagram of the computing apparatus as shown in Fig. 1. As shown in Fig. 2, a signal detected by the X-ray detector 130 is collected by a data collector, and data are stored in a storage 161 through an interface unit 167 and a bus 162. A read-only memory (ROM) 162 stores configuration information and program of a data processor of a computer. A random access memory (RAM) 163 is used to temporarily store various data during a processor 165 is operating. In addition, the storage 161 also stores computer program for performing data processing, such as substance identification program, image processing program, and the like. An internal bus 163 connects the above-mentioned storage 161, the read-only memory 162, the random access memory 163, an input apparatus 164, the processor 165, a display apparatus 166, and the interface unit 167.

After a user enters an operation command input by the input apparatus 164 such as a keyboard and a mouse, instruction codes of the computer program instructs the processor 165 to execute a predetermined data processing algorithm. After being obtained, a data processing result is displayed on a display apparatus 167 such as an LCD display, or is output directly in a form of a hard copy such as printing.

The data obtained by the X-ray detection and data collection apparatus 130 are stored in the computing apparatus 160 for operations such as image processing, e.g. determining information such as a size and a position of the region of interest (the high-Z region or the low-Z region or a region which is hard to penetrate), in order to provide the priori information for the subsequent detection by means of the cosmic rays. According to other embodiments, the above-described X-ray system may be replaced with an X-ray CT apparatus, or a dual-energy system, so that the atomic number image/attenuation coefficient image/electron density image/CT value image etc. of the object being inspected may be obtained. For example, in a case of the dual-energy CT system, the X-ray source 110 can emit both high-energy rays and low-energy rays, and after the detector 130 detects projection data at different energy levels, the processor 166 of the computing apparatus 160 performs dual-energy CT reconstruction to obtain equivalent atomic number and density data of respective faults of the object 120 being inspected. In this case, the computing device 166 may obtain image information of the object 120 being inspected, and divide based thereon to obtain the information, such as the size and the position, of the region of interest (the high-Z region or the low-Z region or the region which is hard to penetrate, etc.), in order to provide more accurate position basis and other priori information for the subsequent cosmic ray inspection.

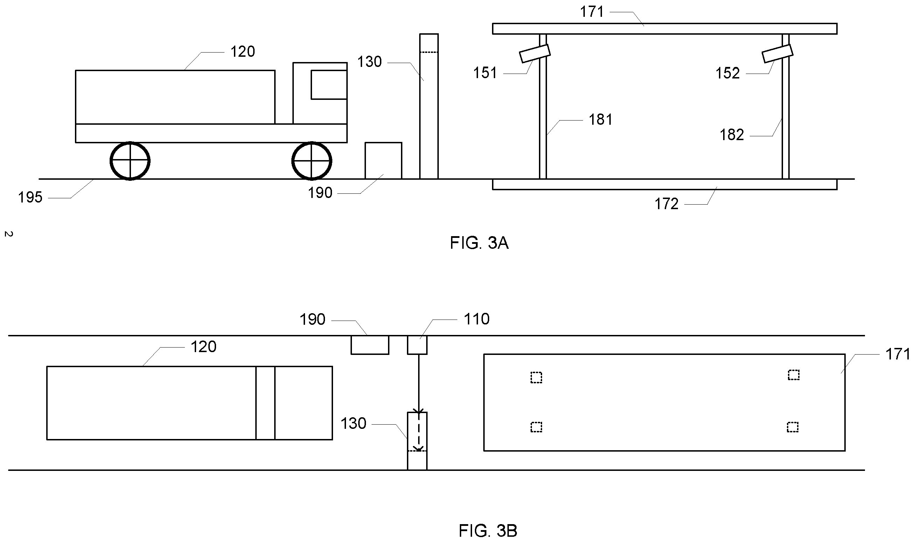

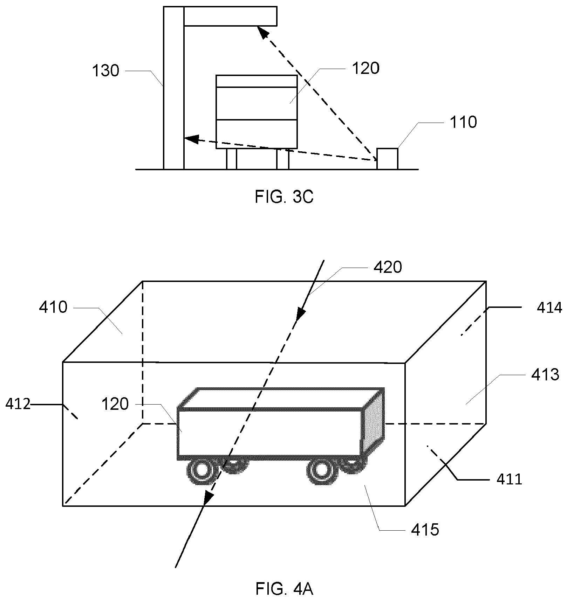

Fig. 3A shows a side view of an inspection device according to an embodiment of the present disclosure, and Fig. 3B shows a top view of an inspection device according to an embodiment of the present disclosure. Fig. 3C shows a schematic diagram of an X-ray scanning subsystem in an inspection device according to an embodiment of the present disclosure. As shown in Fig. 3A, an object 120 being inspected passes an inspection area from left to right, on which a X-ray scanning process is firstly performed and then a cosmic ray scanning process is performed, under control of the controller 140 and the computing apparatus 160 in a control box 190. Although a transmission scanning system which includes the X-ray source 110 and the X-ray detection and data collection apparatus 130 is used in the X-ray scanning as shown in Fig. 3C, the skilled in the art will appreciate that the above-described transmission scanning system may be replaced with a CT scanning system or a backscatter scanning system.

A monitoring apparatus (150 in Fig. 1, and 151 and 152 in Figs. 3A and 3B), such as a camera, may monitor a travel path of the object 120 being inspected when a vehicle is traveling. The cosmic ray detection and data collection apparatus 170 arranged around the vehicle detects information of the cosmic rays penetrating the object being inspected, such as position, time, intensity, etc., so that the entire vehicle body/cargo may be inspected, or only a suspicious region provided by the X-ray imaging system may be analyzed in depth. According to the embodiments of the present disclosure, the cosmic rays for cosmic ray imaging are munos and/or electrons. For a large area position sensitive detector for container vehicle inspection, a drift or a drift chamber, a RPC (Resistive Plate Chamber), a MRPC (Multi-gap Resistive Plate Chamber), a scintillator or scintillation fiber etc. may be used as an available cosmic ray charged particle detector. As shown in Fig. 3A, the cosmic ray detector in an embodiment of the present disclosure includes an upper detection plate 171 and a lower detection plate 172, wherein the lower detection plate 172 is disposed below a ground 195, e.g., in a trench of the ground, and the upper detection plate 171 is supported by support structures 181 and 182, the upper detection plate 171 and the lower detection plate 172 forming an inspection space in a vertical direction to allow the object 120 being inspected to pass through.

Typically, in a shorter period of time, the particles which can be received simultaneously by two, three or more layers of cosmic ray charged particle detectors that are separated by a certain distance (which are re-

6

ferred to as "a set of cosmic ray charged particle detectors") are the same particles. In general, the cosmic ray detector includes a set of detectors 171 and 172 which are arranged on a top and a bottom surfaces respectively. The position, reception time and energy of the received particles are recorded by an electronic system such as a data collection apparatus, and the travel trace and the application position of the particles are calculated by analysis on reception time difference. For example, two particles received by different detectors within a very short time (such as 1 ns) are considered to belong to the same source. In addition, an incident path of the particle may be determined by a layer of detector, and an outgoing path of the particle may be determined by the detector on the other side of the object being inspected, so as to determine the position and the scattering angle of the object being inspected relative to the cosmic rays based on the incident trace and the outgoing trace.

In order to collect as many cosmic ray particles as possible, the set of detectors may be located on both sides of the object being inspected respectively, even in front and rear of the object being inspected, with a multi-face detector measurement method, such as four sets (on top and bottom surfaces and two sides), six sets (on top and bottom surfaces, two sides and front and rear faces). As shown in Fig. 4A, the set of detectors include a top detector 410, a bottom detector 411, a left detector 412, a right detector 413, a front detector 415, and a rear detector 414, which are distributed around the object 120 being inspected. After the cosmic rays 420 penetrate the top detector 410, they continue to penetrate the object 120 being inspected and are detected by the bottom detector 411, as shown in Fig. 4A. In order to increase the efficiency of particle detection, a detector arrangement may also be used, in which the top and the bottom surfaces are disposed horizontally or obliquely, and a certain angle is kept between the detectors arranged on both sides and the ground, i.e., showing an extratensive U-shaped arrangement.

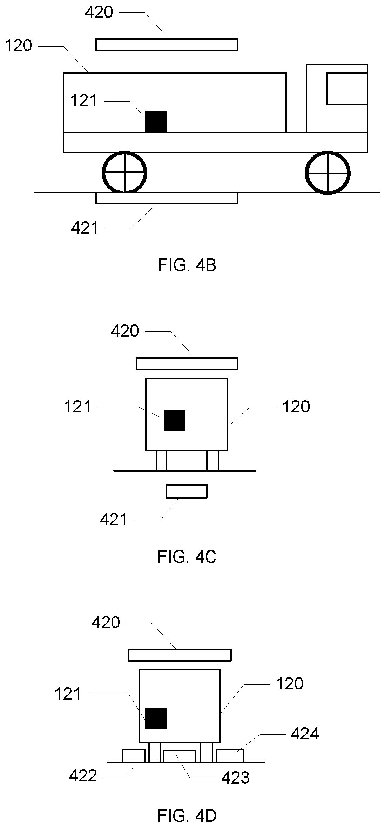

In other embodiments, in order to improve the inspection efficiency and allow the object being inspected to pass through a scanning channel quickly, a continuous large area detector may be used in the traveling direction, so as to obtain sufficient particle information. Assuming that a time instance at which the object 120 being inspected enters an entrance of the channel is $t_1$, a time instance at which the object 120 being inspected leaves an exit of the channel is $t_2$, a total vehicle length is $l$, and a vehicle speed is maintained at about $v$ m/s, a total length of the channel is about $(v \cdot (t_2 - t_1) + 2 \cdot l)$. In addition, a small area detector or a segmented detector may be used to perform a parking inspection on a designated region of the object being inspected, as shown in Figs. 4B, 4C and 4D. Firstly, the position of the suspicious object 121 is judged based on the X-ray imaging result, and then the object 120 being inspected is stopped to the measurement area for inspection. For example, the suspicious object 121 is just located at a position between a small area top detector 420 and a small area bottom detector 421, thereby facilitating the inspection.

As shown in Figs. 4C and 4D, the small area detector 421 or the segmented bottom surface detectors 422, 423 and 424 may be buried underground, and the suspicious region 121 of the object being inspected is just located between the top detector 420 and the bottom detector 421. The bottom detectors 422, 423 and 424 may also be protruded on the ground, just separated by the wheel portions. Although the data amount collected by such small area or segmented detectors is not as complete as that collected by the continuous large area detector, it is possible to reduce difficulty in detector design, system build-up and maintenance, simplify the structure of the system, and decrease cost of hardware and software.

In some embodiments, the track of the moving vehicle is detected by the continuous large area position sensitive detector. Since the vehicle is moving in the inspection channel, it is necessary to use the monitoring apparatus 150 to record the travel track of the vehicle, so as to coincide with the position of the cosmic ray particles detected by the detector. Conventional methods include video positioning, optical path positioning and pressure sensing etc. As the vehicle is proceeding slowly, and its route is approximately a straight line, requirements for the monitoring apparatus 150 need not be too high. If multiple cameras are used for video tracking, only the top camera can meet the positioning requirements. In other embodiments, it only needs to arrange a column of light path on one side of the vehicle side when the optical path positioning is used.

According to an embodiment of the present disclosure, a large amount of data generated during the scanning process may be transmitted to a back-end data processing workstation via a wireless transmission or a wired transmission such as an optical cable, a network cable etc. Compared to the wireless mode, it is recommended to use the cable transmission mode, which not only can guarantee the speed of data transmission, reduce loss of signal during the transmission and improve anti-jamming ability of the signal transmission, but also can significantly reduce technical difficulty and cost on data collection.

According to an embodiment of the present disclosure, the moving vehicle inspection process may include mechanical control, electrical control, data collection, image reconstruction, material identification, result display and danger alarming, etc., which are all controlled by the control box (190 in Fig. 3A) in a master control center. The processing apparatus 165 (e.g., a processor) may be a high performance single PC, or a workstation or a cluster. The display may be a traditional CRT (cathode-ray tube) display or a liquid crystal display.

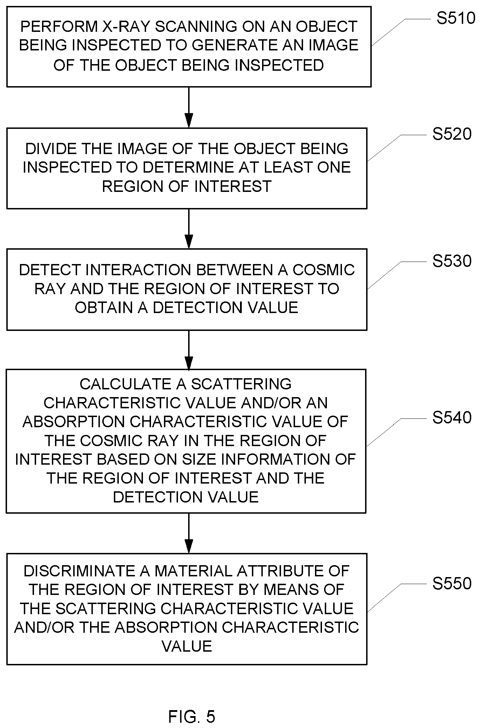

Fig. 5 is a schematic flow chart depicting an inspection method according to an embodiment of the present disclosure. As shown in Fig. 5, in step S510, X-ray scanning is performed on the object being inspected to produce an image of the object being inspected. For example, transmission scanning or CT scanning/dual-energy CT scanning is performed by the system as shown in Fig. 1 on the object 120 being inspected to obtain the image of the object 120 being inspected, and thus obtain inner structure information and size information etc. Firstly, the X-ray imaging system is used to scan the vehicle/cargo to obtain general structure and size information of the object, especially the thickness of the material in the depth direction.

In step S520, the image of the object being inspected is divided to determine at least one region of interest. For example, since a grayscale view of the X-ray imaging and a rule of variation of the atomic numbers are similar, suspicious regions may be obtained as the region of interest by the division according to the grayscale view, e.g., the high-Z region which cannot be penetrated by the X-rays and/or the low-Z region of the explosives/drugs which has limited discernibility.

In step S530, interaction between the cosmic ray and the region of interest is detected to obtain a detection value. For example, when the cosmic ray particles pass through a medium, they exhibit different scattering and absorption characteristics depending on types of materials. The detector 170 detects information such as the number of incident particles and the number of outgoing particles, the reception time, the detection position and the energy thereof.

In step S540, a scattering characteristic value and/or an absorption characteristic value of the cosmic ray in the region of interest is calculated based on size information of the region of interest and the detection value. For example, characteristic parameters, such as a scattering density value and a stopping power value, of the region of interest, such as the high-Z region and/or the low-Z region, are respectively calculated using the above-mentioned detection value and the size information of the region of interest.

In step S550, a material attribute of the region of interest is discriminated by means of the scattering characteristic value and/or the absorption characteristic value. According to an embodiment of the present disclosure, the Coulomb's scattering occurs several times when the muons pass through the substance, deviating from their original direction. There is a correspondence between a scattering angle and an atomic number of the substance, and thus the material may be identified by measuring distribution of the scattering angles of the muons after penetrating the substance. The electrons in the cosmic rays have an obvious scattering effect, and are prone to have a large angle deflection or be absorbed when the electrons penetrate medium/low-Z substance with a certain thickness in the detection area, thus can be used for analyzing the distribution of the low-Z substance, such as drugs/explosives. For example, the correspondence relationship table or the classification curve between the scattering angle and/or the absorption characteristic (for example stopping power) and substances of various atomic numbers may be established in advance, and then in practical inspection process, the corresponding atomic number value may be obtained by collecting the scattering angle and/or the absorption characteristic of the object being inspected, so as to determine the attribute of the material of the object being inspected.

In some embodiments, when the cosmic ray charged particles pass through the medium, different scattering and absorption attributes may be exhibited depending on the types of the materials. In addition to physical quantities associated with the above attributes, the thickness of the material in the depth direction is critical to the calculation of the parameters, besides the number of the incident particles and the number of the outgoing particles, the reception time, the detection position and the energy measured by the detector system. Therefore, the present disclosure firstly uses the X-ray imaging system to obtain the structure and the material thickness information of the object, and then calculates the scattering and absorption characteristics of the substances on the cosmic ray particles for material discrimination. The material identification and positioning effect are better than those of the method of directly using the cosmic ray imaging.

In addition, since the low-Z substance has obvious discriminability on absorption (or stop) of the cosmic rays and the high-Z substance has obvious discriminability on scattering of the cosmic rays, it is required to discriminate between the low-Z substance and the high-Z substance respectively based on different regions. Before that, it is required to divide the atomic numbers of the substances into the low-Z region or the high-Z region as the region of interest, and such a process may also be implemented by the X-ray imaging system.

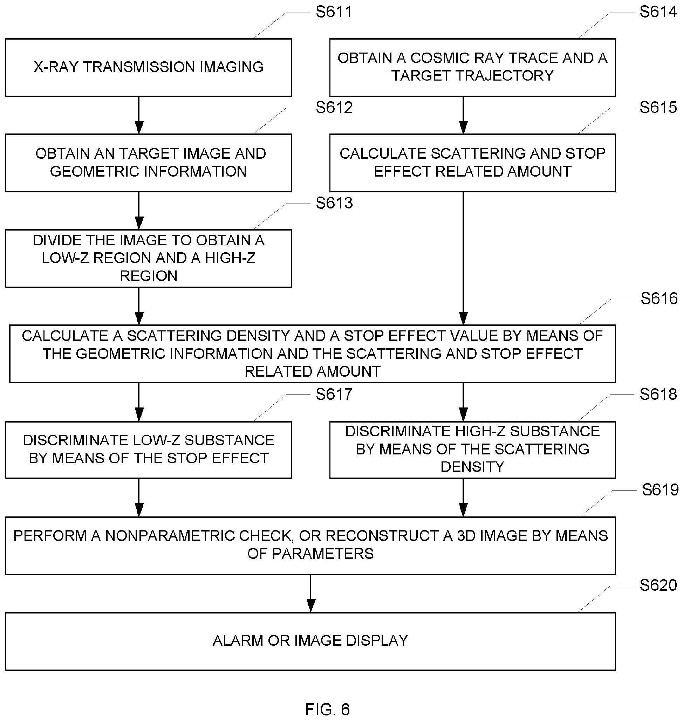

Fig. 6 is a schematic flow chart depicting another inspection method according to an embodiment of the present disclosure. As shown in Fig. 6, in step S611, an initial inspection is firstly performed by the X-ray imaging system on the object 120 being inspected, such as the vehicle, in the inspection area, and then in step S612, the structure image and/or the thickness information of the object in the container is quickly acquired, providing priori knowledge for the secondary inspection of the cosmic ray system. In step S613, the suspicious regions, such as the high-Z region of the heavy nuclear material which cannot be penetrated by the X-rays, and the low-Z region of the explosives /drugs which has limited discernibility, are divided based on e.g. the gray scale value. In other embodiments, the division of the regions of interest may also be performed by atomic number/electron density/linear attenuation coefficient etc.

Then in step S614, the object 120 being inspected is driven into the cosmic ray inspection channel, and in an example where two sets of large area position detectors are used to inspect the moving vehicle, the position detectors on the top and the bottom record the cosmic ray particle signals, respectively. At the same time, the monitoring apparatus 150 is arranged in the channel, which records the position of the vehicle being inspected at all times, and transmits the time-position information to the control center, so as to coincide with the subsequent trajectory.

In step S615, a data collection circuit records the values such as the position, the reception time, the energy and the like of the particles received by detector 170. The computing apparatus 160 performs the time difference analysis, and calculates the travel trace and the application position of the particles to coincide with the time-position information of the monitoring system. If some particle is detected by the incident detector and is received by the receiving detector simultaneously in a short time, it is considered to be a scattering particle. If it enters the measurement area, and is only detected by the incident detector but is not received by the receiving detector, it is considered to be a stopped particle.

In step S616, the high-Z and the low-Z suspicious regions are obtained by division according to the grayscale view of the X-rays, and the scattering density and the stopping power are respectively calculated based on the size of the region of interest and the detection value obtained by the cosmic ray detector 170. For example, the vehicle/cargo is scanned using the X-ray imaging system to obtain the general structure and size information of the object, especially the thickness of the material in the depth direction. Since the grayscale view of the X-ray imaging and the rule of the variation of the atomic numbers are similar, the suspicious regions may be obtained by the division according to the grayscale view, e.g., the high-Z region which cannot be penetrated by the X-rays and/or the low-Z region of the explosives/drugs which has limited discernibility. The characteristic parameters of the high-Z region and the low-Z region may be respectively calculated by formulae as follows.

The scattering density is calculated for the high-Z region, and the cosmic ray particles involved are mainly muons:

$$R_{scatter} = \frac{\sigma_\theta^{\,2} \cdot p^2}{L}$$

wherein $\sigma_\theta$ denotes a Root Mean Square of the scattering angle, $p$ denotes an average momentum of the incident particles, and $L$ denotes the thickness of the material which is obtained by the X-ray imaging system. For example, two particles received by different detectors within a very short time (such as 1 ns) are considered to belong to the same source. In addition, an incident path of the particle may be determined by a layer of detector, and an outgoing path of the particle may be determined by the detector on the other side of the object being inspected, so as to determine the position and the scattering angle of the object being inspected relative to the cosmic rays based on the incident trace and the outgoing trace.

For example, the above average momentum may be calculated based on the detection value from the detector.

The stopping power is calculated for the low-Z region material, and the cosmic ray particles involved include muons and electrons:

$$R_{stop} = \frac{N_{stop}\big/\big(a_{stop} \cdot t_{stop}\big)}{N_{scatter}\big/\big(a_{scatter} \cdot t_{scatter}\big)} \cdot \frac{p}{L}$$

wherein $N_{scatter}/a_{scatter} \cdot t_{scatter}$) represents a number $N_{scatter}$ of particles detected on an imaging area or volume $a_{scatter}$ within a time $t_{scatter}$ which are subjected to a scattering effect by substances, $N_{stop}/(a_{stop} \cdot t_{stop})$ represents a number $N_{stop}$ of particles detected on an imaging area or volume $a_{stop}$ within a time $t_{stop}$ which are subjected to a stopping effect by substances, $p$ denotes the average momentum of the incident particles, and $L$ denotes the thickness of the material which is obtained by the X-ray imaging system. If some particles are detected by the incident detector and are received by the receiving detector simultaneously in a short time, it is considered to be a scattering particle. If it enters the measurement area, and is only detected by the incident detector but is not received by the receiving detector, it is considered to be a stopped particle.

In step S617, the attribute of the material in the low-Z region is discriminated by the calculated stopping power. For example, the attribute of the material may be determined by creating the correspondence relationship table between the stopping power values of some substances and the atomic numbers in advance, and determining the atomic number of the region of interest by looking up the table.

In step S618, the attribute of the material in the high-Z region is discriminated by the calculated scattering density values. For example, the attribute of the material may be determined by creating the correspondence table between the scattering density values of some substances and the atomic numbers in advance, and determining the atomic number of the region of interest by looking up the table.

In step S619, a quick judgment may be made by a nonparametric test, for example, the nonparametric test, such as a K-S test, a chi-square test etc., may be performed based on the atomic numbers of several points in the high-Z region and/or the low-Z region to determine whether contraband is included. If there is contraband, a parameter reconstruction algorithm is further used to perform substance identification and 3D space positioning on the suspicious region. The parameter reconstruction algorithm may use a PoCA algorithm based on track fitting reconstruction, a MLSD-OSEM algorithm based on maximum likelihood iterative reconstruction, or a most probable trace method based on priori estimation etc.

Since the imaging quality increases with increment in the amount of the cosmic ray particles, in order to obtain a better signal to noise ratio and a better image quality, sufficient data may be collected once for uniform data processing, or new data may be added in real time to be processed step by step. Considering that the vehicle being inspected has a larger volume, and large computation amount is needed in order to obtain an image with a better spatial resolution, some acceleration methods are required to be used for improving the imaging speed. And since a plurality of effective traces are independent from each other, the reconstruction process may be performed in parallel, and can be parallelized by a multicore CPU, a multithreaded GPU, or other accelerating methods.

In step S620, the detection result is provided by the display. If there is no contraband such as heavy-nuclear material, explosives or drugs, the vehicle may pass through normally; otherwise, an danger alarming is enabled, issuing a warning, and the type and the position, or even a 3D image reconstructed by the cosmic rays or an image mixed with the X-ray image of the contraband are displayed on the display.

The above embodiments of the present disclosure combine the X-ray imaging technology with the cosmic ray imaging technology. By performing a dual-mode scanning on the object being inspected, not only the identification effect of the traditional cosmic ray imaging technology on the heavy-nuclear material is improved, but also the identification accuracy for the medium-light Z material, such as drugs and explosives and other dangerous goods and contrabands, may be increased. The X-ray imaging technology may quickly obtain the general structure, thickness and grayscale information of the vehicle/cargo, provide the priori knowledge for the subsequent reconstruction. The cosmic ray imaging technology uses natural cosmic rays, which has strong penetration capability, and may penetrate the material with a high density and a high thickness. With the thickness and the priori information provided by the X-ray imaging system, classification of the cosmic ray imaging system on the medium-light Z material may also achieve a good imaging effect. A safe and effective inspection scheme may be provided for the heavy-Z material, such as the heavy nuclear substance, and the medium-light Z material, such as the explosives/drugs.

Various embodiments of the inspection devices and the inspection methods have been explained in the above detailed description in connection with the schematic diagrams, flowcharts and/or examples. In a case that such schematic diagrams, flowcharts and/or examples include one or more functions and/or operations, it will be understood by the skilled in the art that each of the functions and/or operations in the schematic diagrams, flowcharts and/or examples may be implemented separately and/or collectively by various configurations, hardware, software, firmware, or substantially any combination thereof. In one embodiment, several portions of the subject matter of the embodiments of the present disclosure may be implemented by application specific integrated circuits (ASICs), field programmable gate arrays (FPGAs), digital signal processors (DSPs), or other integrated formats. However, the skilled in the art will recognize that some aspects of the embodiments disclosed herein may be equivalently implemented in a whole or in part in an integrated circuit, which may be implemented as one or more programs running on one or more computers (e.g., implemented as one or more programs running on one or more computer systems), implemented as one or more programs running on one or more processors (e.g., implemented as one or more programs running on one or more microprocessors), implemented as firmware, or substantially as any combination thereof, and the skilled in the art will have the capability of designing circuits and/or writing in software and/or firmware code based on the present disclosure. In addition, the skilled in the art will realize that the mechanisms of the subject matters of the present disclosure may be distributed as various forms of program products, and that regardless of the particular type of the signal carrier medium for performing the distribution, the embodiments of the subject matters of the present disclosure are all applicable. Examples of signal carrier medium includes, but are not limited to, recordable medium, such as floppy disks, hard disk drives, compact discs (CDs), digital versatile disks (DVDs), digital tapes, computer memory, and the like; and transmission medium, such as digital and/or analog communication medium (e.g., fiber optic cables, waveguides, wired communication links, wireless communication links, etc.).

While the present disclosure has been described with reference to several typical embodiments, it should be understood that the terms used here are illustrative and exemplary but not restrictive. Since the present disclosure can be embodied in many forms without departing from the spirit or substance of the present disclosure, it should be understood that the above-described embodiments are not limited to any of the foregoing details, but should be construed broadly within the spirit and scope of the present disclosure as defined by the appended claims. Thus, all variations and modifications that fall within the scope of the claims or the equivalents thereof are intended to be covered by the appended claims.

## Claims

1. An inspection method comprising:

   performing X-ray scanning on an object being inspected to generate an image of the object being inspected;
   dividing the image of the object being inspected to determine at least one region of interest;
   detecting interaction between a cosmic ray and the region of interest to obtain a detection value;

calculating a scattering characteristic value and/or an absorption characteristic value of the cosmic ray in the region of interest based on size information of the region of interest and the detection value; and
discriminating a material attribute of the region of interest by means of the scattering characteristic value and/or the absorption characteristic value.

2. The inspection method according to claim 1, wherein the image of the object being inspected includes at least one of following images:

a single-energy transmission image, an attenuation coefficient image, a CT value image, an electron density image, and an atomic number image.

3. The inspection method according to claim 1, wherein the material attribute of one region of interest is discriminated by means of the scattering characteristic value, and the material attribute of another region of interest is discriminated by means of the absorption characteristic value.

4. The inspection method according to claim 1, further comprising:

judging whether nuclear material is contained in the region of interest by performing a nonparametric test.

5. The inspection method according to claim 1, further comprising:

reconstructing a 3D image of the object being inspected by means of parameters.

6. The inspection method according to claim 1, wherein an alarm signal is issued when the material attribute of the object being inspected satisfies a predetermined condition.

7. The inspection method according to claim 1, wherein the step of discriminating the material attribute of the region of interest by means of the scattering characteristic value and/or the absorption characteristic value comprises:

determining an atomic number value of the material in the region of interest based on the scattering characteristic value and/or the absorption characteristic value by means of a previously created classification curve or lookup table.

8. The inspection method according to claim 1, further comprising:

monitoring a trajectory of the object being inspected; and
calculating, based on the trajectory, the detection value indicating a result of the interaction between the cosmic ray and the object being inspected.

9. The inspection method according to claim 1, wherein performing the scanning on the object being inspected comprises at least one of:

performing backscattering scanning on the object being inspected;
performing single-energy transmission scanning on the object being inspected;
performing single-energy CT scanning on the object being inspected;
performing double-energy X-ray transmission scanning on the object being inspected;
performing double CT scanning on the object being inspected.

10. The inspection method according to claim 1, wherein the step of calculating the scattering characteristic value and/or the absorption characteristic value of the cosmic ray in the region of interest based on the size information of the region of interest and the detection value comprises:

calculating the scattering characteristic value by a formula of:

$$R_{scatter} = \frac{\sigma_\theta^2 \cdot p^2}{L}$$

wherein $\sigma_\theta$ denotes a Root Mean Square of a scattering angle, $p$ denotes an average momentum of incident particles, and $L$ denotes the size information, particularly, a thickness of the material obtained by the X-ray scanning;
calculating a stopping power value as the absorption characteristic value by a formula of:

$$R_{stop} = \frac{N_{stop}\big/\big(a_{stop} \cdot t_{stop}\big)}{N_{scatter}\big/\big(a_{scatter} \cdot t_{scatter}\big)} \cdot \frac{p}{L}$$

wherein $N_{scatter}/a_{scatter} \cdot t_{scatter})$ represents a number $N_{scatter}$ of particles detected on an imaging area or volume $a_{scatter}$ within a time $t_{scatter}$ which are subjected to a scattering effect by substances, $N_{stop}/(a_{stop} \cdot t_{stop})$ represents a number $N_{stop}$ of particles detected on an imaging area or volume $a_{stop}$ within a time $t_{stop}$ which are subjected to a stopping effect by substances, $p$ denotes the average momentum of the incident particles, and $L$ denotes the size information, particularly, the thickness of the material obtained by the X-ray scanning.

11. An inspection device, comprising:

an X-ray source configured to emit an X-ray to perform scanning on an object being inspected;
a detection and collection apparatus configured to detect and collect the X-ray penetrating the object being inspected to obtain detection data;
a data processing apparatus configured to generate an image of the object being inspected based on the detection data and divide the image of the object being inspected to determine at least one region of interest;
a cosmic ray detection apparatus configured to detect interaction between a cosmic ray and the region of interest to obtain a detection value and calculate a scattering characteristic value and/or an absorption characteristic value of the cosmic ray in the region of interest based on size information of the region of interest and the detection value,
wherein the data processing apparatus is further configured to discriminate a material attribute of the region of interest by means of the scattering characteristic value and/or the absorption characteristic value.

12. The inspection device according to claim 11, further comprising:

a positioning apparatus configured to determine a trajectory of the object being inspected, wherein the detection value obtained by the cosmic ray detection apparatus is matched with the trajectory to obtain the detection value of the region of interest.

13. The inspection device according to claim 11, wherein the data processing apparatus is configured to discriminate the material attribute of one region of interest by means of the scattering characteristic value, and discriminate the material attribute of another region of interest by means of the absorption characteristic value.

14. The inspection device according to claim 11, wherein the data processing apparatus is configured to determine an atomic number value of the material in the region of interest based on the scattering characteristic value and/or the absorption characteristic value by means of a previously created classification curve or lookup table.

15. The inspection device according to claim 11, wherein the data processing apparatus is configured to:

calculate the scattering characteristic value by a formula of:

$$R_{scatter} = \frac{\sigma_\theta^2 \cdot p^2}{L}$$

wherein $\sigma_\theta$ denotes a Root Mean Square of a scattering angle, $p$ denotes an average momentum of incident particles, and $L$ denotes the size information, particularly, a thickness of the material obtained by the X-ray scanning;
calculate a stopping power value as the absorption characteristic value by a formula of:

$$R_{stop} = \frac{N_{stop} / \left( a_{stop} \cdot t_{stop} \right)}{N_{scatter} / \left( a_{scatter} \cdot t_{scatter} \right)} \cdot \frac{p}{L}$$

wherein $N_{scatter}/(a_{scatter} \cdot t_{scatter})$ represents a number $N_{scatter}$ of particles detected on an imaging area or volume $a_{scatter}$ within a time $t_{scatter}$ which are subjected to a scattering effect by substances, $N_{stop}/(a_{stop} \cdot t_{stop})$ represents a number $N_{stop}$ of particles detected on an imaging area or volume $a_{stop}$ within a time $t_{stop}$ which are subjected to a stopping effect by substances, $p$ denotes the average momentum of the incident particles, and $L$ denotes the size information, particularly, the thickness of the material obtained by the X-ray scanning.

100

120

110

X-Ray
Source

Monitoring
Apparatus — 150

X-Ray
Decector

Controller — 140

Cosmic
Ray
Detector — 170

130

160

Computing
Apparatus

FIG. 1

160

Storage — 161

ROM — 162

RAM — 163

163

Input
Apparatus

Processor

Display
Device

Interface
Unit — 167

164

165

166

FIG. 2

FIG. 3A

FIG. 3B

EP 3 333 594 A1

FIG. 3C

FIG. 4A

420

120

121

FIG. 4B

420

121

120

421

FIG. 4C

420

121

120

424

422

423

FIG. 4D

PERFORM X-RAY SCANNING ON AN OBJECT BEING INSPECTED TO GENERATE AN IMAGE OF THE OBJECT BEING INSPECTED — S510

↓

DIVIDE THE IMAGE OF THE OBJECT BEING INSPECTED TO DETERMINE AT LEAST ONE REGION OF INTEREST — S520

↓

DETECT INTERACTION BETWEEN A COSMIC RAY AND THE REGION OF INTEREST TO OBTAIN A DETECTION VALUE — S530

↓

CALCULATE A SCATTERING CHARACTERISTIC VALUE AND/OR AN ABSORPTION CHARACTERISTIC VALUE OF THE COSMIC RAY IN THE REGION OF INTEREST BASED ON SIZE INFORMATION OF THE REGION OF INTEREST AND THE DETECTION VALUE — S540

↓

DISCRIMINATE A MATERIAL ATTRIBUTE OF THE REGION OF INTEREST BY MEANS OF THE SCATTERING CHARACTERISTIC VALUE AND/OR THE ABSORPTION CHARACTERISTIC VALUE — S550

FIG. 5

S611

X-RAY TRANSMISSION IMAGING

S614

OBTAIN A COSMIC RAY TRACE AND A TARGET TRAJECTORY

S612

OBTAIN AN TARGET IMAGE AND GEOMETRIC INFORMATION

S615

CALCULATE SCATTERING AND STOP EFFECT RELATED AMOUNT

S613

DIVIDE THE IMAGE TO OBTAIN A LOW-Z REGION AND A HIGH-Z REGION

S616

CALCULATE A SCATTERING DENSITY AND A STOP EFFECT VALUE BY MEANS OF THE GEOMETRIC INFORMATION AND THE SCATTERING AND STOP EFFECT RELATED AMOUNT

S617

DISCRIMINATE LOW-Z SUBSTANCE BY MEANS OF THE STOP EFFECT

S618

DISCRIMINATE HIGH-Z SUBSTANCE BY MEANS OF THE SCATTERING DENSITY

S619

PERFORM A NONPARAMETRIC CHECK, OR RECONSTRUCT A 3D IMAGE BY MEANS OF PARAMETERS

S620

ALARM OR IMAGE DISPLAY

FIG. 6

Europäisches
Patentamt

European
Patent Office

Office européen
des brevets

# EUROPEAN SEARCH REPORT

Application Number

EP 17 19 4043

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2016/216398 A1 (BENDAHAN JOSEPH [US] ET AL) 28 July 2016 (2016-07-28)<br>* paragraphs [0005], [0007], [0010], [0014], [0015], [0017], [0018], [0020], [0036], [0074] - [0078], [0086], [0093], [0096], [0099], [0101], [0102]; figures 1-4 * | 1,2,4-9, 11,12,14<br>3,10,13, 15 | INV.<br>G01V5/00 |
| Y | US 2009/129544 A1 (CHEN ZHIQIANG [CN] ET AL) 21 May 2009 (2009-05-21)<br>* paragraphs [0008], [0017]; figures 3,4,6,7,9 * | 3,13 | |
| Y | WO 2015/178986 A2 (DECISION SCIENCES INT CORP [US]) 26 November 2015 (2015-11-26)<br>* paragraphs [0058], [0061], [0068], [0069], [0092], [0096]; figures 3-6,9-12,18,19 * | 10,15 | |
| Y<br><br>A | WO 2010/025300 A2 (LOS ALAMOS NAT SECURITY LLC [US]; DECISION SCIENCES CORP [US]; MORRIS) 4 March 2010 (2010-03-04)<br>* paragraphs [0040], [0042], [0069] - [0071], [0087], [0090]; figures 6,7 * | 10,15<br><br>2,5 | TECHNICAL FIELDS SEARCHED (IPC)<br><br>G01V |
| A | CN 105 700 029 A (UNIV TSINGHUA; NUCTECH CO LTD) 22 June 2016 (2016-06-22)<br>* paragraphs [0021], [0053], [0069]; figures 4-7 * | 10,12,15 | |

The present search report has been drawn up for all claims

| Place of search | Date of completion of the search | Examiner |
|---|---|---|
| The Hague | 4 April 2018 | Van Ouytsel, Krist'l |

EPO FORM 1503 03.82 (P04C01)

## ANNEX TO THE EUROPEAN SEARCH REPORT
## ON EUROPEAN PATENT APPLICATION NO.

EP 17 19 4043

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2018

| Patent document cited in search report | Publication date | Patent family member(s) | Publication date |
|---|---|---|---|
| US 2016216398 A1 | 28-07-2016 | US 2015108349 A1<br>US 2016216398 A1 | 23-04-2015<br>28-07-2016 |
| US 2009129544 A1 | 21-05-2009 | AU 2008243199 A1<br>CN 101435783 A<br>DE 102008043526 A1<br>GB 2454782 A<br>JP 4806441 B2<br>JP 2009122108 A<br>RU 2008144918 A<br>US 2009129544 A1<br>WO 2009070977 A1 | 04-06-2009<br>20-05-2009<br>10-06-2009<br>20-05-2009<br>02-11-2011<br>04-06-2009<br>20-05-2010<br>21-05-2009<br>11-06-2009 |
| WO 2015178986 A2 | 26-11-2015 | AU 2015264759 A1<br>CA 2940959 A1<br>CN 106233160 A<br>EP 3111256 A2<br>HK 1232301 A1<br>SG 11201607107U A<br>US 2015241593 A1<br>WO 2015178986 A2 | 15-09-2016<br>26-11-2015<br>14-12-2016<br>04-01-2017<br>05-01-2018<br>29-09-2016<br>27-08-2015<br>26-11-2015 |
| WO 2010025300 A2 | 04-03-2010 | AU 2009285682 A1<br>CA 2735546 A1<br>CN 102203637 A<br>EP 2318862 A2<br>HK 1162684 A1<br>JP 5819726 B2<br>JP 2012501450 A<br>RU 2011111443 A<br>US 2011248163 A1<br>WO 2010025300 A2 | 04-03-2010<br>04-03-2010<br>28-09-2011<br>11-05-2011<br>01-04-2016<br>24-11-2015<br>19-01-2012<br>10-10-2012<br>13-10-2011<br>04-03-2010 |
| CN 105700029 A | 22-06-2016 | CN 105700029 A<br>EP 3196674 A1<br>US 2017329038 A1 | 22-06-2016<br>26-07-2017<br>16-11-2017 |

EPO FORM P0459

For more details about this annex : see Official Journal of the European Patent Office, No. 12/82